# EUROPEAN PATENT SPECIFICATION

(11) **EP 2 492 057 B1**
(45) Date of publication and mention of the grant of the patent: **11.06.2014**
(21) Application number: 11193765.2
(22) Date of filing: 15.12.2011
(51) Int. Cl.: B25J 9/10, B25J 9/16, G05B 19/404

(54) **Robot, robot system, and rotating electrical machine**
Roboter, Robotersystem und elektrische Drehmaschine
Robot, système de robot et machine électrique rotative

(30) Priority: 23.02.2011 JP 2011037692
(43) Date of publication of application: 29.08.2012
(73) Proprietor: Kabushiki Kaisha Yaskawa Denki, Kitakyushu-shi, Fukuoka 806-0004 (JP)
(72) Inventor: Izumi, Tetsuro, Kitakyushu-shi, Fukuoka 806-0004 (JP)
(74) Representative: Grünecker, Kinkeldey, Stockmair & Schwanhäusser

(56) References cited:
- JP-A- 63 240 386
- JP-A- 2010 244 343
- JP-A- 2010 269 412
- JP-A- 2011 020 132
- US-A1- 2010 191 374

## Description

### FIELD

The embodiment discussed herein is directed to a rotating electrical machine, as well as to a robot and a robot system including such a machine.

### BACKGROUND

There has been known a robot control apparatus that controls a robot in which a plurality of links is connected by joints. The robot control apparatus controls a motor provided at a joint portion of the robot and transmits power of the motor to a link via a speed reducer.

There is torsion in the speed reducer. Therefore, a robot control apparatus is proposed that improves a positioning accuracy by compensating for the torsion of the speed reducer. For example, the specification of U.S. Patent Application Publication No. 2010/0191374 proposes a robot control apparatus that compensates for torsion of a speed reducer by correcting a position command based on a difference between the output of an encoder provided on the output shaft side of the speed reducer and a predetermined position command.

JP 2010-269412 A discloses a robot device comprising: a controller for driving and controlling a driving motor provided on a base side link; and a revolute joint part for transmitting power of the driving motor to a distal end side link through a reduction gear having an input shaft, a fixed shaft and an output shaft. The controller drives and controls the driving motor based on the angle information of the input shaft detected by an encoder fixed on the distal end side link.

US 2010 191374 A discloses a method for controlling a robot wherein at least one axis of the robot has a motor with a primary encoder on an input side of a robot joint. The motor is controlled by a servo responsive to an original motion command signal and a feedback signal from the primary encoder. The method includes: providing a secondary encoder on an output side of the robot joint; detecting a position of the secondary encoder and determining a secondary encoder compensation signal based on a difference between a desired accurate position of the output side of the robot joint represented by the original motion command signal and the secondary encoder detected position; and outputting a new motion command signal to the servo based on the original motion command signal and the secondary encoder compensation signal for determining a desired accurate position of the output side of the robot joint.

JP 2010 244343 A shows a positioning system provided with an actuator having a wave gear device. The positioning system is driven and controlled by a semi-closed loop control for controlling the load position of a load device based on the motor position of a motor shaft of a motor.

JP 2011 020132 A discloses an apparatus for manufacturing a laminated iron core having an index device capable of easily changing a rotating angle of a squeeze ring. The index device includes: a servo motor, a deceleration gear mechanism for decelerating the rotation of the output shaft of the servo motor, an encoder for detecting the rotating angle of the deceleration output shaft of the deceleration gear mechanism, a control means for controlling the servo motor, and a synchronous signal generation means for generating a synchronous signal indicating the specific rotation phase of a main shaft. The control means controls the servo motor in such a way that the squeeze ring is rotated by a predetermined angle at a predetermined timing per one rotation of the main shaft in synchronization with the synchronous signal.

JP 63 240386 A discloses a controlling method for the speed of a motor. In accordance therewith, the rotary shaft of a small-sized DC motor is connected through a high speed rotation encoder to a reduction gear, and a low speed rotation encoder is attached to the output shaft of the gear. The output pulse number per one rotation of the high speed rotation encoder is smaller than that of the low speed rotation encoder. The rotation control of the motor at the time of starting and constant speed rotation is conducted by an output signal from the high speed rotation encoder. On the contrary, the stopping position is accurately calculated by utilizing an output signal from the low speed rotation encoder having a fine detecting angle at the time of braking and stopping the motor.

The rotation angle of the output shaft of the speed reducer is desirably detected with a higher accuracy for compensating for the torsion of the speed reducer more accurately.

An object of the present invention is to provide a rotating electrical machine capable of detecting a rotation angle of the output shaft of a speed reducer with a higher accuracy, while being small in size.

This object is achieved by the features as set forth in claim 1. Further advantageous embodiments of the present invention are set forth in the dependent claims.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
FIG. 1 is a schematic side view of a robot according to an embodiment;
FIG. 2 is a schematic front view of the robot according to the embodiment;
FIG. 3 is a diagram illustrating a configuration of a joint portion of the robot according to the embodiment;
FIG. 4 is a diagram illustrating a configuration of a shaft coupling shown in FIG. 3;
FIG. 5 is a diagram illustrating a configuration of a robot system according to the embodiment; and
FIG. 6 is a diagram illustrating a configuration of a command generating unit according to the embodiment.

### DESCRIPTION OF EMBODIMENT

Hereinafter, an embodiment of a robot system disclosed in the present application will be described in detail based on the drawings. The present invention is not limited to this embodiment.

The robot system according to the present embodiment includes a robot and a robot control apparatus. Adjacent links are connected to each other via a joint in the robot and the robot control apparatus controls the robot by driving the joint. A multi-joint robot is explained as an example of the robot, however, it is sufficient that the robot is a robot including at least one joint. As the links connected via the joint, a base, a swivel head, and an arm are exemplified, however, the links are not limited thereto.

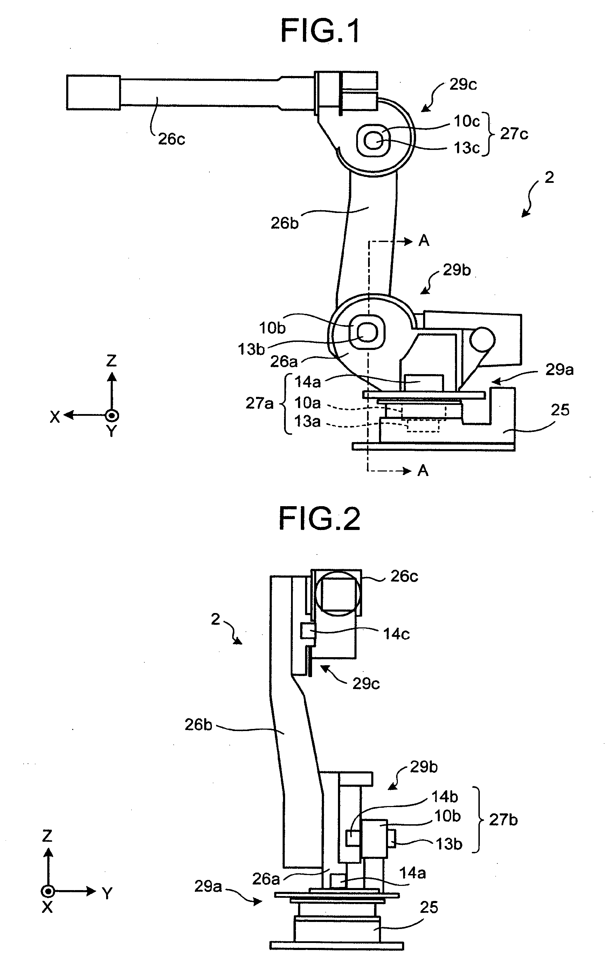

First, the configuration of the robot according to the present embodiment is explained. FIG. 1 is a schematic side view of the robot according to the present embodiment and FIG. 2 is a schematic front view of the robot according to the present embodiment.

As shown in FIG. 1 and FIG. 2, a robot 2 is a multi-joint robot that includes a base 25, a swivel head 26a, a lower arm 26b, an upper arm 26c, and joints 29a to 29c. The joint 29a rotatably connects the swivel head 26a to the base 25. The joint 29b rotatably connects the lower arm 26b to the swivel head 26a. The joint 29c rotatably connects the upper arm 26c to the lower arm 26b. In the followings, each of the joints 29a to 29c is generically referred to as a joint 29 and the swivel head 26a, the lower arm 26b, and the upper arm 26c are generically referred to as a link 26 in some cases for convenience' sake.

The base 25 is fixed to a fixed surface, such as a floor and a ceiling, with not-shown anchor bolts. The base 25, the swivel head 26a, the lower arm 26b, and the upper arm 26c are, for example, structure support members made from a metal casting or the like and are arranged in order from the base 25 via the joints 29.

The joints 29a to 29c include rotating electrical machines 27a to 27c, respectively. The rotating electrical machine 27a includes an actuator 10a, a first encoder 13a, and a second encoder 14a. In the similar manner, the rotating electrical machine 27b includes an actuator 10b, a first encoder 13b, and a second encoder 14b and the rotating electrical machine 27c includes an actuator 10c, a first encoder 13c, and a second encoder 14c.

The first encoders 13a to 13c (an example of a motor angle detecting unit) are encoders that detect the rotation angle of the input shafts of the actuators 10a to 10c, respectively. The second encoders 14a to 14c are encoders that detect the rotation angle of the output shafts of the actuators 10a to 10c (an example of a detecting unit), respectively. In the followings, the actuators 10a to 10c are generically referred to as an actuator 10 in some cases for convenience' sake. In the similar manner, the first encoders 13a to 13c are generically referred to as a first encoder 13 and the second encoders 14a to 14c are generically referred to as a second encoder 14 in some cases.

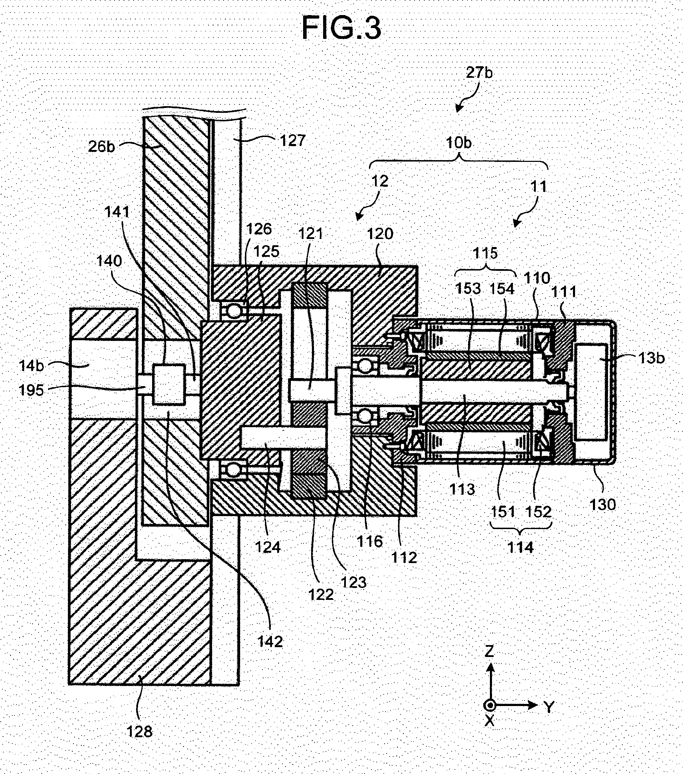

The configurations of the rotating electrical machines 27a to 27c are explained. The rotating electrical machines 27a to 27c have a similar configuration, so that only the rotating electrical machine 27b is explained in this embodiment. FIG. 3 is a diagram illustrating the configuration of the rotating electrical machine 27b according to the present embodiment and corresponds to a cross-sectional view taken along line A-A in FIG. 1.

As shown in FIG. 3, the rotating electrical machine 27b includes the actuator 10b, the first encoder 13b, the second encoder 14b, and the lower arm 26b as a link. The actuator 10b includes a motor 11 and a speed reducer 12 that transmits the driving force of the motor 11 to said lower arm 26b.

In the above rotating electrical machine 27b, the second encoder 14b is connected to an output shaft 125 of the speed reducer 12 via a shaft coupling 140. Therefore, in the second encoder 14b, the rotation angle of the output shaft 125 of the speed reducer 12 can be accurately detected. The configuration of the rotating electrical machine 27b is explained in more detail below. In the followings, the speed reducer 12 is explained as a planetary roller type speed reducer, however, the speed reducer 12 is not limited to this. For example, a planetary gear type speed reducer may be used as the speed reducer 12. Moreover, the configuration of the motor 11 is also not limited to that shown in FIG. 3.

The motor 11 includes a frame 110, a first bracket 111, a second bracket 112, a shaft 113, a stator 114, and a rotor 115. The frame 110 is formed into a tubular shape and the stator 114 is attached to the inner periphery of the frame 110. The first bracket 111 is connected to one end of the frame 110 in the outer peripheral portion and includes an opening, through which the shaft 113 passes, in the inner peripheral portion. The second bracket 112 is connected to the other end of the frame 110 in the outer peripheral portion and supports a bearing 116 in the inner peripheral portion. The shaft 113 is rotatably supported by the bearing 116.

The stator 114 includes a stator core 151 and a stator winding 152. On the inner peripheral side of the stator 114, the rotor 115 is arranged to face the stator 114 via space. The rotor 115 includes a cylindrical rotor core 153 and a plurality of permanent magnets 154 arranged on the outer peripheral side of the rotor core 153 and rotates around the shaft 113 as a rotation axis.

In the motor 11 configured as above, the rotating magnetic field is generated on the inner side of the stator 114 by causing current to flow in the stator winding 152 of the stator 114. The rotor 115 rotates by interaction of this rotating magnetic field and the magnetic field generated by the permanent magnets 154 of the rotor 115 and the shaft 113 rotates with the rotation of the rotor 115.

The speed reducer 12 includes a housing 120 formed into a tubular shape and one end of the housing 120 is fixed to the second bracket 112 of the motor 11. The housing 120 includes therein a sun roller 121, a ring 122, a planetary roller 123, a planetary roller shaft 124, the output shaft 125, and a bearing 126.

The sun roller 121 is an input shaft of the speed reducer 12. The sun roller 121 is integrated with the shaft 113 and the center axis thereof coincides with the center axis of the shaft 113. The ring 122 is a cylindrical elastic ring fit into the groove in the housing 120 and the planetary roller 123 is rotatably arranged between the inner periphery of the ring 122 and the outer periphery of the sun roller 121. The planetary roller shaft 124 is fixed to the planetary roller 123 at the rotation center position thereof and the planetary roller shaft 124 is fixed to the output shaft 125.

The bearing 126 is fixed to the inner periphery of the other end of the housing 120 and the output shaft 125 is rotatably supported by the bearing 126. Moreover, the other end of the housing 120 is fixed to a frame 127 of the swivel head 26a. On the other hand, the output shaft 125 rotatably supported with respect to the housing 120 is fixed to the lower arm 26b.

In the speed reducer 12 configured as above, the sun roller 121 rotates with the rotation of the shaft 113 of the motor 11. With the rotation of the sun roller 121, the planetary roller shaft 124 revolves around the sun roller 121 while rotating on its axis. With the revolution of the planetary roller shaft 124, the output shaft 125 rotates. The leading peripheral portion of the output shaft 125 is fixed to the lower arm 26b, so that the lower arm 26b rotates around the output shaft 125 with the rotation of the output shaft 125.

The first encoder 13b is arranged on the opposite side of the speed reducer 12 to be adjacent to the motor 11 and is covered with a cover 130. The first encoder 13b detects the rotation angle of the shaft 113.

On the other hand, the second encoder 14b is connected to the output shaft 125 of the speed reducer 12 via the shaft coupling 140. Specifically, a connecting shaft 141 is fixed to the center of the tip end of the output shaft 125 of the speed reducer 12 and a detection shaft 195 of the second encoder 14b is connected to the output shaft 125 of the speed reducer 12 via the shaft coupling 140 and the connecting shaft 141. The second encoder 14b includes a detector that detects the rotation of the detection shaft 195 and outputs the detection result according to the rotation of the detection shaft 195.

In this manner, because the second encoder 14b is connected to the output shaft 125 of the speed reducer 12 via the shaft coupling 140, the position of the output shaft 125 of the speed reducer 12 can be accurately detected, thus enabling to performing highly accurate positioning.

Moreover, the second encoder 14b is supported by a support member 128 fixed to the frame 127 of the swivel head 26a. In the lower arm 26b, the second encoder 14b and the speed reducer 12 are arranged with the lower arm 26b therebetween by providing an opening 142 in the area between the output shaft 125 of the speed reducer 12 and the second encoder 14b. Consequently, the second encoder 14b and the output shaft 125 of the speed reducer 12 can be easily connected to each other via the shaft coupling 140.

Moreover, the second encoder 14b can be made close to the lower arm 26b by arranging the shaft coupling 140 in the opening 142 provided in the lower arm 26b. Therefore, the rotating electrical machine 27b can be made small in size, leading to the size reduction of the robot 2. The size of the robot 2 can be further reduced by enlarging the opening 142 and arranging the second encoder 14b in the opening 142.

Furthermore, heat transfer between the connected shafts can be suppressed by forming at least an intermediate member positioned between the shafts with resin in the shaft coupling 140. Consequently, heat generation of the speed reducer 12 can be suppressed from affecting the second encoder 14b, so that the detection accuracy in the second encoder 14b can be maintained. Moreover, the degree of freedom in arrangement of the second encoder 14b can be increased by using an Oldham's coupling that absorbs eccentricity and declination as the shaft coupling 140.

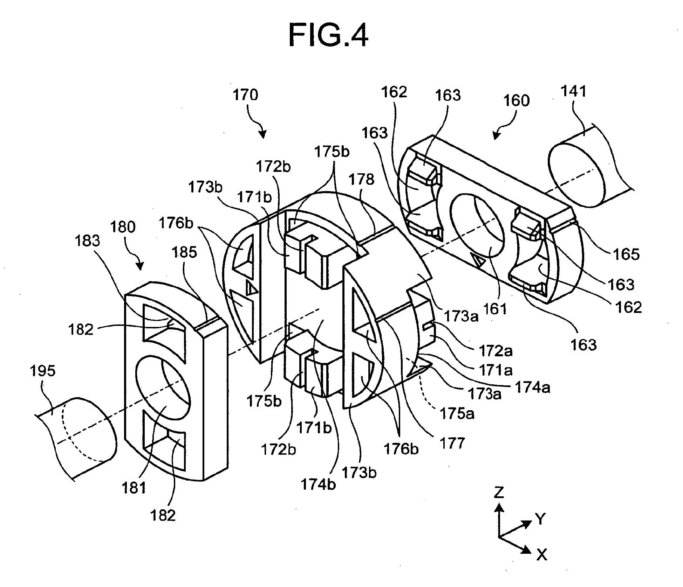

A configuration example of the shaft coupling 140 is specifically explained with reference to FIG. 4. FIG. 4 is a diagram illustrating an example of the configuration of the shaft coupling 140. In FIG. 4, the extending direction of the connecting shaft 141 is a Y direction, an upper direction when the drawing is seen is a Z direction, and a direction perpendicular to both the Y axis and the Z axis is an X direction for convenience' sake.

As shown in FIG. 4, the shaft coupling 140 is an Oldham's coupling and includes a first hub 160, a slide 170, and a second hub 180. The shaft coupling 140 is a coupling that connects the connecting shaft 141 as a rotation shaft and the detection shaft 195 of the second encoder 14 whose shaft ends face each other. The first and second hubs 160 and 180 are, for example, made of metal such as aluminum alloy and the slide 170 as an intermediate coupling (an example of an intermediate member) is made of resin such as acetal resin and nylon resin. Therefore, heat transfer between the shafts can be suppressed. The first and second hubs 160 and 180 may be made of a resin member instead of metal.

In the first hub 160, a center hole 161 as a shaft hole is formed in the center portion and two side holes 162 are formed on both sides of the center hole 161 in the radial direction to be symmetric with respect to the center hole 161. In the similar manner, in the second hub 180, a center hole 181 as a shaft hole is formed in the center portion and two side holes 182 are formed on both sides of the center hole 181 in the radial direction to be symmetric with respect to the center hole 181.

In this manner, the first and second hubs 160 and 180 include the side holes 162 and 182, respectively, and the thickness in the axis direction (Y direction) is suppressed from increasing by setting the side holes 162 and 182 as an area to be engaged with the slide 170.

Moreover, in the first hub 160, projections 163 having a trapezoidal cross sectional shape are formed on both sides of each side hole 162 in the Z direction and an assembly groove 165 is formed in the outer periphery of the first hub 160. In the similar manner, in the second hub 180, projections 183 having a trapezoidal cross sectional shape are formed on both sides of each side hole 182 in the X direction and an assembly groove 185 is formed in the outer periphery of the second hub 180.

In the slide 170, projections 171a and 171b projecting from flat portions 174a and 174b are formed. Whereas two projections 171a are arranged to align in the x direction, two projections 171b are arranged to align in the Z direction. In other words, the arrangement directions of the projections 171a and the projections 171b are 90° apart from each other. Moreover, a slit 172a is formed in the projection 171a and a slit 172b is formed in the projection 171b.

Furthermore, in the slide 170, side walls 173a and 173b projecting from the flat portions 174a and 174b are formed on both sides of the projections 171a and 171b, respectively. The side walls 173b are positioned on the back side of the projections 171a and the side walls 173a are positioned on the back side of the projections 171b. Therefore, the strength of the slide 170 in the axis direction (Y direction) can be increased, enabling to reduce the thickness of the slide 170 in the axis direction.

Moreover, in the slide 170, recesses 175a recessed from the flat portion 174a are formed on both sides of each projection 171a and, in the similar manner, recesses 175b recessed from the flat portion 174b are formed on both sides of each projection 171b. Moreover, assembly grooves 177 and 178 are formed in the outer periphery of the slide 170.

The first hub 160, the slide 170, and the second hub 180 configured as above form the shaft coupling 140. The assembling method of the shaft coupling 140 is explained below.

The first hub 160 is connected to the connecting shaft 141 by fitting the connecting shaft 141 into the center hole 161 in the first hub 160. Moreover, the detection shaft 195 of the second encoder 14 is connected to the second hub 180 by fitting the detection shaft 195 of the second encoder 14 into the center hole 181 in the second hub 180.

Moreover, the projections 171a of the slide 170 are fit into the side holes 162 in the first hub 160 and the recesses 175a of the slide 170 are fit into the projections 163 of the first hub 160. Consequently, the first hub 160 is fit into the slide 170. In the similar manner, the projections 171b of the slide 170 are fit into the side holes 182 in the second hub 180 and the recesses 175b of the slide 170 are fit into the projections 183 of the second hub 180.

The slits 172a and 172b are formed in the projections 171a and 171b, so that the projections 171a and 171b have flexibility in the directions orthogonal to the extending directions of the slits 172a and 172b, respectively. Moreover, because two recesses 176b are formed in each side wall 173b so that the thickness of the side walls 173b does not become large, the side walls 173b have flexibility. The same thing can be said to the side walls 173a. Therefore, the first and second hubs 160 and 180 are fit into the slide 170 with high slidability.

The first hub 160 and the second hub 180 have a similar configuration. Therefore, the first hub 160 is attached to the slide 170 so that the assembly groove 165 of the first hub 160 and the assembly groove 177 of the slide 170 are continuous. Moreover, the second hub 180 is attached to the slide 170 so that the assembly groove 185 of the second hub 180 and the assembly groove 178 of the slide 170 are continuous. Consequently, assembling is facilitated.

The operation of the shaft coupling 140 assembled as above is explained. The connecting shaft 141 rotates according to the rotation of the output shaft 125 of the speed reducer 12 and the first hub 160 rotates according thereto. Then, with the rotation of the first hub 160, the slide 170 and the second hub 180 rotate and the detection shaft 195 of the second encoder 14 rotates.

When the shaft centers of the connecting shaft 141 and the detection shaft 195 do not coincide with each other and are eccentric, the shaft coupling 140 absorbs the eccentricity by the projections 171a and 171b of the slide 170 sliding in the side holes 162 and 182 in the first and second hubs 160 and 180 and transmitting the rotation of the connecting shaft 141 to the detection shaft 195. When the shaft centers of the connecting shaft 141 and the detection shaft 195 do not coincide with each other and have a declination, in the similar manner, the shaft coupling 140 absorbs the declination by the projections 171a and 171b of the slide 170 sliding in the side holes 162 and 182 in the first and second hubs 160 and 180 and transmitting the rotation of the connecting shaft 141 to the detection shaft 195.

As above, because the first and second hubs 160 and 180 fit in the slide 170 with high slidability in the shaft coupling 140, rotation can be transmitted with a high accuracy. Moreover, because the slide 170 is provided with the side walls 173a and 173b, the strength of the slide 170 can be increased and therefore the thickness of the slide 170 in the axis direction can be reduced.

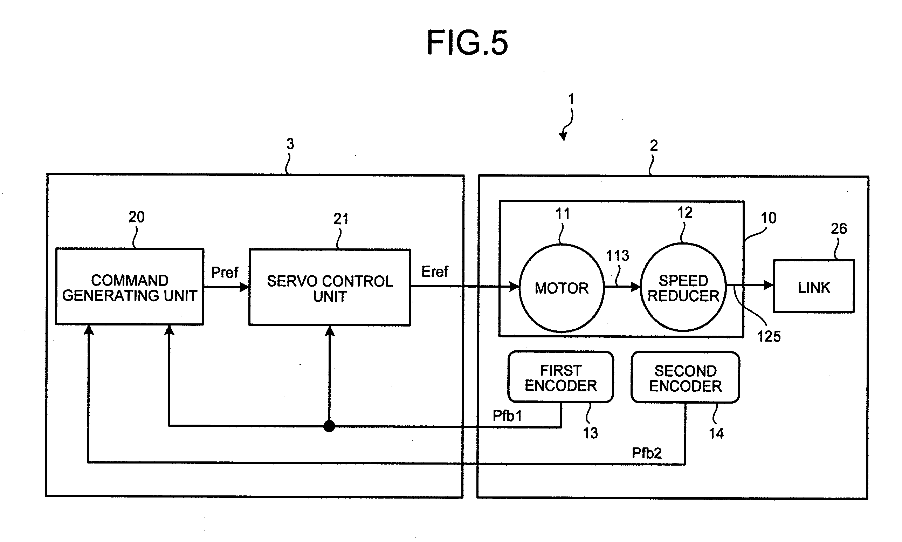

Next, the configuration and the operation of the robot control apparatus that controls the robot 2 are explained. FIG. 5 is a diagram illustrating a configuration of a robot system 1 according to the embodiment. In this embodiment, an example of driving one actuator 10 is explained. For example, in the case of controlling the actuator 10b, a robot control apparatus 3 controls the actuator 10b based on the information obtained from the first and second encoders 13b and 14b.

The robot control apparatus 3 drives the motor 11 provided at the joint of the robot 2. Consequently, the driving force of the motor 11 is transmitted to the link 26 by the speed reducer 12 and the link 26 is driven. As shown in FIG. 5, the robot control apparatus 3 includes a command generating unit 20 that outputs a position command Pref of the motor 11 and a servo control unit 21 that controls the motor 11 so that the rotation angle of the motor 11 matches the position command Pref. The position command Pref is a position command defining the rotation angle of the motor 11.

The command generating unit 20 outputs the position command Pref corrected based on rotation angles Pfb1 and Pfb2 obtained from the first and second encoders 13 and 14 to the servo control unit 21. The first encoder 13 detects the rotation angle of the shaft 113 of the motor 11 as the rotation angle Pfb1 and the second encoder 14 detects the rotation angle of the output shaft 125 of the speed reducer 12 as the rotation angle Pfb2.

The servo control unit 21 obtains the position command Pref from the command generating unit 20 and obtains the rotation angle Pfb1 of the motor 11 from the first encoder 13. The servo control unit 21 calculates a current command Eref for matching the rotation angle Pfb1 of the motor 11 and the position command Pref based on the position command Pref and the rotation angle Pfb1 and outputs the current command Eref to the motor 11.

As above, the position command Pref output from the command generating unit 20 is corrected based on the rotation angle Pfb1 of the motor 11 and the rotation angle Pfb2 of the output shaft 125 of the speed reducer 12. Because an element of delay time of servo control is not included in the rotation angle Pfb1 of the motor 11 and the rotation angle Pfb2 of the output shaft 125 of the speed reducer 12, torsion of the speed reducer 12 can be compensated without performing the setting operation of compensating for the delay time of servo control.

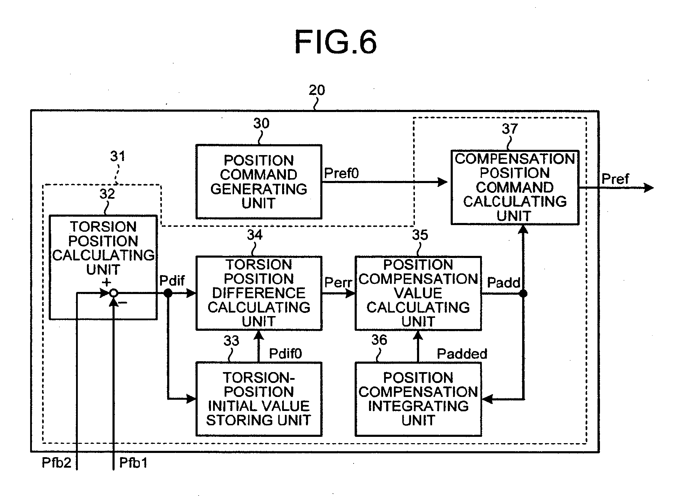

FIG. 6 is a diagram illustrating the configuration of the command generating unit 20 according to the embodiment. As shown in FIG. 6, the command generating unit 20 includes a position command generating unit 30 and a position command correcting unit 31.

The position command generating unit 30 generates a position command Pref0 of the motor 11 based on a predetermined command profile. Then, the position command generating unit 30 outputs the generated position command Pref0 to the position command correcting unit 31.

The command profile is generated, for example, as follows. First, an end effector position command (XYZ coordinates) is calculated so that the trajectory of a not-shown end effector attached to the tip end of the link of the robot 2 passes at predetermined acceleration and speed. The XYZ coordinates are coordinates of space in which the end effector as a control point operates. Then, the position command Pref0 (motor coordinates) of the motor 11 is generated by performing coordinate transformation on the end effector position command. The motor coordinates are coordinates of the rotation angle of the motor 11 that drives the link 26 of the robot 2. The command profile is formed by the position command Pref0 group generated according to the trajectory of the end effector.

The position command correcting unit 31 generates a position compensation value Padd that is a position command correction signal and corrects the position command Pref0 output from the position command generating unit 30 by the position compensation value Padd. Specifically, the position command correcting unit 31 includes a torsion position calculating unit 32, a torsion-position initial value storing unit 33, a torsion position difference calculating unit 34, a position compensation value calculating unit 35, a position compensation integrating unit 36, and a compensation position command calculating unit 37.

The torsion position calculating unit 32 generates a torsion position Pdif based on the rotation angle Pfb1 of the shaft 113 that is the rotation shaft of the motor 11 and the rotation angle Pfb2 of the output shaft 125 of the speed reducer 12 and outputs the generated torsion position Pdif to the torsion position difference calculating unit 34. The torsion position Pdif is information indicating torsion of the speed reducer 12.

Specifically, the torsion position calculating unit 32 subtracts the rotation angle Pfb1 of the motor 11 from the rotation angle Pfb2 calculated from the rotation angle Pfb2 of the output shaft 125 of the speed reducer 12 based on the reduction ratio and sets this difference value as the torsion position Pdif. For example, when the reduction ratio of the speed reducer 12 is set to n, the torsion position calculating unit 32 subtracts the rotation angle Pfb1 of the motor 11 from the rotation angle Pfb2 multiplied by n and sets this difference value as the torsion position Pdif.

The torsion-position initial value storing unit 33 stores the torsion position Pdif output from the torsion position calculating unit 32 when an initialization signal Init is input, as a torsion position initial value Pdif0. For example, when the posture of the robot 2 is a basic posture, the initialization signal Init is input to the torsion-position initial value storing unit 33, and the torsion position Pdif output from the torsion position calculating unit 32 at that time is stored as the torsion position initial value Pdif0 in the torsion-position initial value storing unit 33.

The torsion position difference calculating unit 34 subtracts the torsion position initial value Pdif0 obtained from the torsion-position initial value storing unit 33 from the torsion position Pdif obtained from the torsion position calculating unit 32 to generate a torsion position difference Perr (=Pdif-Pdif0). The torsion position difference Perr is information indicating a displacement of the torsion position Pdif from the torsion position initial value Pdif0.

The position compensation value calculating unit 35 subtracts a position compensation integrated value Padded from the torsion position difference Perr to generate the position compensation value Padd. The position compensation value Padd is a position command correction signal and is output from the position compensation value calculating unit 35 to the compensation position command calculating unit 37. The position compensation integrated value Padded is information output from the position compensation integrating unit 36 and the position compensation integrating unit 36 integrates the position compensation value Padd output from the position compensation value calculating unit 35 to generate the position compensation integrated value Padded.

The compensation position command calculating unit 37 adds the position compensation value Padd obtained from the position compensation value calculating unit 35 to the position command Pref0 obtained from the position command generating unit 30 to generate a new position command Pref. Then, the compensation position command calculating unit 37 outputs the generated position command Pref to the servo control unit 21.

In this manner, in the robot system 1 according to the embodiment, the command generating unit 20 corrects the position command Pref0 by adding the position compensation value Padd obtained from the difference between the rotation angle Pfb1 of the motor 11 and the rotation angle Pfb2 of the output shaft 125 of the speed reducer 12 to the position command Pref0 as the position command correction signal. Although an element of delay time of servo control is included between the position command Pref0 and the rotation angle Pfb1 of the motor 11, an element of delay time of servo control is not included in the rotation angle Pfb1 of the motor 11 and the rotation angle Pfb2 of the output shaft 125 of the speed reducer 12. Therefore, in the robot system 1 according to the embodiment, the position error due to the torsion of the speed reducer 12 can be reduced without performing the setting operation of compensating for delay time of servo control.

Moreover, in the position compensation value calculating unit 35, because the position compensation integrated value Padded is subtracted from the torsion position difference Perr, the torsion position difference Perr once added as the position compensation value Padd is not added from the next time. Thus, the position command Pref can be accurately compensated according to the torsion position difference Perr.

In the above embodiment, the second encoder 14 is provided to three shafts, however, because each shaft is independently controlled, the second encoder 14 may be provided to only one or two shafts as appropriate.

A limiting unit, such a limiter and a filter, may be provided for avoiding abrupt fluctuation of the position command Pref due to correction. In this case, the limiting unit can be provided in a path between the torsion position difference calculating unit 34 and the compensation position command calculating unit 37.

For example, the position compensation value Padd obtained by the compensation position command calculating unit 37 can be limited to a limiting value by providing a limiter between the position compensation value calculating unit 35 and the compensation position command calculating unit 37. Moreover, for example, the rate of change of the position compensation value Padd obtained by the compensation position command calculating unit 37 can be limited by providing a filter between the position compensation value calculating unit 35 and the compensation position command calculating unit 37.

Moreover, an encoder is explained as an example of the first detecting unit that detects the rotation angle Pfb1 of the motor 11, however, it is sufficient that the first detecting unit can detect the rotation angle Pfb1 of the motor 11. For example, the first detecting unit may be an observer. In the similar manner, an encoder is explained as an example of the second detecting unit that detects the rotation angle Pfb2 of the output shaft 125 of the speed reducer 12, however, it is sufficient that the second detecting unit can detect the rotation angle Pfb2 of the output shaft 125 of the speed reducer 12. For example, the second detecting unit may be an observer.

As above, in the robot system 1 according to the present embodiment, the second encoder 14 is connected to the output shaft 125 of the speed reducer 12 via the shaft coupling 140, so that the position of the output shaft 125 of the speed reducer 12 can be accurately detected and therefore highly accurate positioning can be performed. Moreover, the position compensation value Padd obtained from the rotation angle Pfb1 of the motor 11 and the rotation angle Pfb2 of the output shaft 125 of the speed reducer 12 is added to the position command Pref0. Therefore, the position error due to the torsion of the speed reducer 12 can be reduced without performing the setting operation of compensating for delay time of servo control, so that highly accurate positioning can be performed.

## Claims

1. A rotating electrical machine (27b) comprising:
a motor (11);
a link (26b); and
a speed reducer (12) adapted to transmit a driving force of the motor (11) to the link (26b);
wherein
a shaft coupling (140) to connect shafts is arranged in an opening (142) provided in the link (26b) and
a detecting unit (14b) is connected to the output shaft (125) of the speed reducer (12) via the shaft coupling (140) to detect a rotation angle of the output shaft (125) of the speed reducer (12),
the detecting unit (14b) and the speed reducer (12) being arranged with the link (26b) therebetween.

2. The rotating electrical machine (27b) according to claim 1, wherein an intermediate member (170) of the shaft coupling (140) positioned between connected shafts is made of resin.

3. A robot (2) comprising a rotating electrical machine (27b) according to claim 1 or 2.

4. A robot system (1) comprising:
the robot (2) according to claim 3;
a robot control apparatus (3) adapted to drive the motor (11) of the robot (2); and
a motor angle detecting unit (13b) adapted to detect a rotation angle of the motor (11),
wherein the robot control apparatus (3) is adapted to correct a position command of the motor (11) based on a detection result by the detecting unit (14b) and a detection result by the motor angle detecting unit (13b).

## Patentansprüche

1. Rotierende elektrische Maschine (27b), die umfasst:
einen Motor (11);
eine Verbindungsstange (26b); und
ein Untersetzungsgetriebe (12), das zum Übertragen einer Antriebskraft des Motors (11) auf die Verbindungsstange (26b) eingerichtet ist;
wobei
eine Wellenkupplung (140) zum Verbinden von Wellen in einer in der Verbindungsstange (26b) vorhandenen Öffnung (142) angeordnet ist; und
eine Erfassungseinheit (14b) über die Wellenkupplung (140) mit der Ausgangswelle (125) des Untersetzungsgetriebes (12) verbunden ist, um einen Drehwinkel der Ausgangswelle (125) des Untersetzungsgetriebes (12) zu erfassen,
zwischen der Erfassungseinheit (14b) und dem Untersetzungsgetriebe (12) die Verbindungsstange (26b) angeordnet ist.

2. Rotierende elektrische Maschine (27b) nach Anspruch 1, wobei ein Zwischenelement (170) der Wellenkupplung (140), das zwischen verbundenen Wellen positioniert ist, aus Kunststoff besteht.

3. Roboter (2), der eine rotierende elektrische Maschine (27b) nach Anspruch 1 oder 2 umfasst.

4. Robotersystem (1), das umfasst:
den Roboter (2) nach Anspruch 3;
eine Roboter-Steuervorrichtung (3), die zum Ansteuern des Motors (11) des Roboters (2) eingerichtet ist; und
eine Motor-Winkelerfassungseinheit (13b), die zum Erfassen eines Drehwinkels des Motors (11) eingerichtet ist,
wobei die Roboter-Steuervorrichtung (3) so eingerichtet ist, dass sie einen Positionsbefehl des Motors (11) auf Basis eines Ergebnisses der Erfassung durch die Erfassungseinheit (14b) sowie eines Ergebnisses der Erfassung durch die Motor-Winkelerfassungseinheit (13b) korrigiert.

## Revendications

1. Machine électrique rotative (27b), comprenant :
- un moteur (11) ;
- un dispositif de liaison (26b) ; et
- un réducteur de vitesse (12) adapté à transmettre une force d'entrainement du moteur (1) au dispositif de liaison (26b) ;
- dans laquelle :
- un dispositif d'accouplement d'arbre (140) pour relier des arbres est agencé dans une ouverture (142) ménagée dans le dispositif de liaison (26b) ; et
- une unité de détection (14b) est reliée à l'arbre de sortie (125) du réducteur de vitesse (12) via le dispositif d'accouplement d'arbre (140) pour détecter un angle de rotation de l'arbre de sortie (125) du réducteur de vitesse (12),
- l'unité de détection (14b) et le réducteur de vitesse (12) étant agencés avec le dispositif de liaison (26b) entre ceux-ci.

2. Machine électrique rotative (27b) selon la revendication 1, dans laquelle un élément intermédiaire (170) du dispositif d'accouplement d'arbre (140) positionné entre des arbres reliés est fait d'une résine.

3. Robot (2) comprenant une machine électrique rotative (27b) selon les revendications 1 ou 2.

4. Système de robot (1) comprenant :
- un robot selon la revendication 3 ;
- un appareil de commande de robot (3) adapté à actionner le moteur (11) du robot (2) ; et
- une unité de détection d'angle de moteur (13b) adaptée à détecter un angle de rotation du moteur (11).,
- dans lequel l'appareil de commande de robot (3) est adapté à corriger une commande de position du moteur (11) fondée sur un résultat de détection de l'unité de détection (14b) et un résultat de détection de l'unité de détection d'angle de moteur (13b).
